# EUROPEAN PATENT SPECIFICATION

(11) **EP 0 910 226 B1**
(45) Date of publication and mention of the grant of the patent: **06.08.2008**
(21) Application number: 98118630.7
(22) Date of filing: 01.10.1998
(51) Int. Cl.: H04S 3/00, H04R 5/02, H04N 5/60

(54) **Television set comprising loudspeakers and a decoder for surround-sound audio signals**
Fernsehgerät mit Lautsprechern und Dekoder für Raumklangaudiosignalen
Téléviseur avec haut-parleurs et décodeur pour signaux audio à effet spatial

(30) Priority: 14.10.1997 DE 19745261
(43) Date of publication of application: 21.04.1999
(73) Proprietor: THOMSON Licensing, 92100 Boulogne-Billancourt (FR)
(72) Inventor: Adrion, Ulrich, 78647 Trossingen (DE)
(74) Representative: Arnold, Klaus-Peter

(56) References cited:
- EP-A- 0 370 619
- DE-A1- 3 727 098
- US-A- 3 086 078
- US-A- 5 177 798
- US-A- 5 553 149
- PATENT ABSTRACTS OF JAPAN vol. 013, no. 410 (E-819), 11 September 1989 (1989-09-11) & JP 01 149698 A (FUJITSU GENERAL LTD), 12 June 1989 (1989-06-12)

## Description

The invention is based on a television set which comprises a decoder for surround-sound audio signals and has loudspeakers built in on the front side.

Films shown in cinemas have already been using multichannel sound reproduction for a relatively long time; this imparts a highly three-dimensional auditory impression and, consequently, a very realistic experience. It is referred to as a Dolby Pro-Logic Sound system or as surround sound and uses four sound channels which are encoded in two channels which are compatible with customary two-channel stereo. These four sound channels contain audio signals for loudspeakers at the front left and right and in the centre and a channel for rear and/or lateral loudspeakers for the surround sound.

Since the surround-sound audio signals are also frequently contained on prerecorded VHS video cassettes or transmitted via the TV program, these can be reproduced by television sets containing a built-in decoder. In conjunction with a television set, use is frequently made of separate AV receivers with built-in Dolby Pro-Logic decoder for sound reproduction, which operate five loudspeaker boxes. In this case, on the recommendation of the manufacturers, the boxes are installed in the living room such that there is in each case one at the front left and right, as is customary in the case of a stereo system, a centre box is under the television set and there are two boxes for the surround channel on the rear panel left and right, or on the side panels left and right at the back as far as possible. It is also known to provide television sets with loudspeakers on the left and right for the stereo signals and with a loudspeaker in the centre, for example under the picture tube, for the centre channel, and which have a terminal for the rear, external loudspeakers of the surround channel.

A television set according to the preamble of claim 1 is described in EP-A-0 370 619.

The object of the present invention, therefore, is to specify a television set with surround-sound reproduction which can be better manipulated by a user.

This object is achieved by means of the features of claim 1.

Thus, no external loudspeakers are required for three-dimensional sound reproduction, with the result that the packaging outlay of the surround-sound television set corresponds approximately to that of a normal stereo television set. Television sets having external loudspeaker boxes as specified in the introduction have, together with the external loudspeakers, a relatively high packaging outlay which leads, moreover, to a very large box. This outlay is significantly reduced by the invention. Transport and storage costs are also reduced by virtue of the smaller and also lighter cardboard box.

A further advantage is that a user of this set does not have to install any additional loudspeakers in the living room, which loudspeakers not only require additional space but also can often be placed only with difficulty, adversely affect the ambience of the living room and require elaborate cabling. Of course, the loudspeakers arranged in the television set cannot radiate the high power that external loudspeakers can, but the television set can be equipped with terminals for external surround loudspeakers, just like already known television sets, with the result that the said loudspeakers can be retrofitted as required.

By virtue of the simpler installation of the set, it is possible simultaneously to increase acceptance by and attractiveness to a purchaser, who is enabled by the invention to install a surround-sound television set at his/her home without an additional outlay and space requirement.

In the course of the digitisation of television technology and of recording and reproduction technology, further surround-sound systems have also been presented in the meantime, such as Dolby AC3 and MPEG-2, for example. These systems use digital audio data for five channels, front left and right and centre, two channels left and right at the rear for stereophonic sound and an additional channel for a bass loudspeaker. Thus with the present invention, good stereophonic sound results are also expected in conjunction with these or else future surround-sound audio systems.

The fitting of loudspeakers on the top side of the television set alone or in conjunction with laterally fitted loudspeakers for the reproduction of the surround channel is possible.

The invention is explained in more detail below by way of example with reference to a diagrammatic drawing, in which:

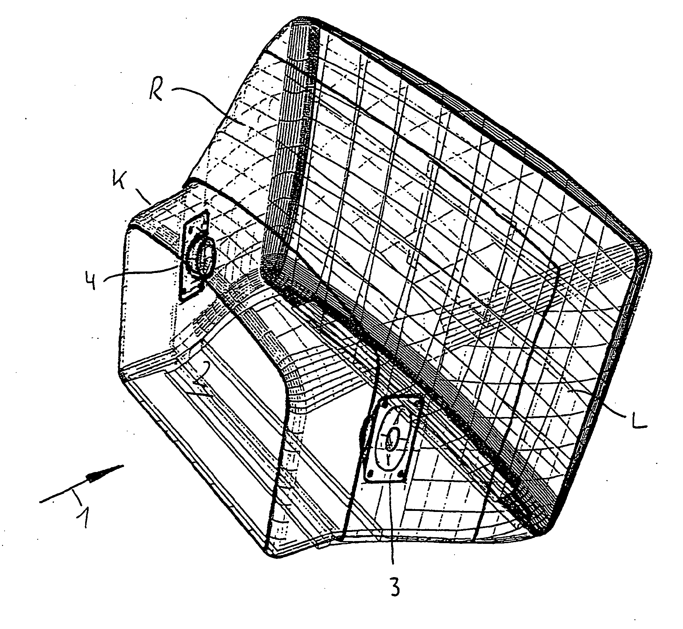

- Figure 1: shows the surface of a television set, illustrated by means of a grid raster, with two loudspeakers arranged laterally.

The television set in the Figure is shown viewed laterally from the rear and elevated somewhat to the left, with the arrow 1 representing a normal to the rear side 2 of the set, and is illustrated perspectively by means of a grid raster. The lateral areas L, R on the left and right, viewed from the front side, taper towards the rear as far as an end part K in the form of a box. At the end of the tapering part, a respective loudspeaker 3, 4 is integrated laterally on the left (L) and on the right (R) for the purpose of radiating the surround-sound channel. These loudspeakers radiate the sound laterally approximately at an angle of 90°, relative to a viewer.

As a result of the tapering housing, the viewer is not in visual contact with the loudspeakers, with the result that no sound components are radiated directly in the direction of the viewer. The other loudspeakers of the television set for radiating the audio signals left, right and centre are not illustrated; they are built into the set at the front in an already known manner. The placing of the loudspeakers 3 and 4 in this exemplary embodiment is only by way of example. Other positions on the side parts R and L are likewise possible. In the model illustrated in the Figure, the positioning in the rear half of these side parts L, R proved to be particularly favourable, but mounting on the end part K in the form of a box is likewise possible. The loudspeakers 3, 4 used here are broadband loudspeakers which radiate the sound directly away from the housing. A broadband speaker is sufficient because the Dolby surround sound signals have a limited frequency range, not extending to very low and high frequencies.

The surround sound decoder of the TV as well as the other electronic components are state of the art and are therefore not shown in the figure. The invention as described can be used for the Dolby Pro-Logic System as well as for the Dolby AC-3 or the MPEG-2 audio system when the TV is equipped with the appropriate decoder.

## Claims

1. Television set having
loudspeakers built in on the front side for reproduction of the front audio channels, and
a decoder for decoding Dolby Pro-Logic, Dolby AC3 or MPEG2 surround-sound audio signals into front audio channels and a rear surround channel, **characterized in that**
a loudspeaker, which radiates upwards, is arranged on the television set on the top of the housing of the television set for a reproduction of said rear surround channel.

## Patentansprüche

1. Fernsehgerät mit frontseitig eingebauten Lautsprechern für die Wiedergabe der vorderen Audiokanäle und mit einem Dekoder für die Dekodierung von Dolby Pro-Logic, Dolby AC3 oder MPEG2 Surround-Sound-Audiosignalen in vordere Audiokanäle und in einen hinteren Surround-Kanal, **dadurch gekennzeichnet, daß** an dem Fernsehgerät oben am Gehäuse ein Lautsprecher (3, 4), der nach oben abstrahlt, zur Wiedergabe des besagten hinteren Surround-Kanals angeordnet ist.

## Revendications

1. Téléviseur comportant
des haut-parleurs intégrés à l'avant destinés à la reproduction des canaux audio avant, et
un décodeur destiné à décoder des signaux audio de son ambiant Dolby Pro-Logic, Dolby AC3 or MPEG2 dans des canaux audio avant et un canal audio de son ambiant arrière,
**caractérisé en ce que**
un haut-parleur, qui émet vers le haut, est installé sur le dessus du boîtier du téléviseur en vue de la reproduction dudit canal de son ambiant arrière.
